# EUROPEAN PATENT APPLICATION

(11) **EP 4 557 151 A1**
(43) Date of publication of application: **21.05.2025**
(21) Application number: 24208946.4
(22) Date of filing: 25.10.2024
(51) Int. Cl.: G06F 21/64

(54) **VISUAL INTEGRITY CHECKS**

(30) Priority: 16.11.2023 GB 202317559
(71) Applicant: Nokia Technologies Oy, 02610 Espoo (FI)
(72) Inventor: VAN DEN BROECK, Marc, Sint-Katelijne-Waver (BE); HOSTE, Lode, Hove (BE)
(74) Representative: Nokia EPO representatives

(57) **Abstract**

An apparatus, method and computer program is described comprising: means for capturing a presentation (106) on a display (104a), wherein the presentation (106) includes data representative of a first hash (108); means for generating a second hash (111) from the captured presentation (122); means for reading a digital code (107) from the display (104a) or the captured presentation (122), the digital code (107) comprising the first hash (108) and a digital signature (109) associated with the first hash (108); means for comparing the first hash (108) and second hash (111); and means for sending an indication on whether the digital signature (109) is legitimate in response to the first and second hashes (108, 111) at least substantially matching.

## Description

### Field

Various example embodiments may relate to systems, methods and/or computer programs for performing visual integrity checks on requests from a service to a user device.

### Background

In the current digital world, where users access via their user devices services from a cloud platform or distributed computing system, there is now always an uncertainty with trusting a request from a seemingly trusted service. It is a scenario that has become all too familiar: the user receives a request, email, message, communication, an application request, or a service request that seems to originate from a service that the user recognises and trusts. For example, the service may include, without limitation, for example, an email client, a retail website, online banking application, a social media platform application, an Information Technology (IT) department application, operating system and/or mobile provider applications/services and/or any other trusted source/service that the user may use via their user device. However, there is always an uncertainty when using these services as to whether the user can genuinely trust the service request or has the request been tampered with.

For example, cybercriminals can intercept communications from and/or impersonate trusted entities/services and manipulate users into inadvertently divulging sensitive information (e.g., login credentials, confidential information, company secrets etc.,) and/or taking action to install malicious software masquerading as genuine updates or software, and/or taking a "recommended" action that results in malicious behaviours. There is a desire for an integrity checking apparatus, method and/or system that is robust in detecting communications from cybercriminals whilst being simple and convenient to operate for users operating their user devices.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, this specification describes an apparatus comprising: means for capturing a presentation on a display, wherein the presentation includes data representative of a first hash; means for generating a second hash from the captured presentation; means for reading a digital code from the display or the captured presentation, the digital code comprising the first hash and a digital signature associated with the first hash; means for comparing the first hash and second hash; and means for sending an indication on whether the digital signature is legitimate in response to the first and second hashes at least substantially matching.

In some example embodiments, the display is part of a user device separate to the apparatus, the apparatus comprising an imaging component for capturing the presentation on the display of the user device.

In some example embodiments, the display is part of the apparatus, wherein capturing the presentation on the display of the apparatus further comprising means for capturing a screenshot of the presentation on the display, wherein the screenshot is the captured presentation.

In some example embodiments, the presentation comprises one or more from the group of: an image for presentation on the display; a plurality of images for presentation on the display; a video for presentation on the display; or data representative of a user prompt, interactive prompt, or dialog box for rendering on the display.

In some example embodiments, the captured presentation comprises a first image associated with the first hash and a second image associated with the digital code, and wherein: the means for generating the second hash of the captured presentation further comprises means for applying a hashing algorithm to the first image for outputting the second hash; and the means for reading the digital code from the display further comprises means for reading the digital code from the second image.

In some example embodiments, further comprising: means for cropping the captured presentation to generate the first image and means for cropping the captured presentation to generate the second image.

In some example embodiments, the digital code further comprising one or more from the group of: a bar code; a two-dimensional matrix bar code; a Quick Response (QR) code; a High Capacity Colored two-Dimensional (HCC2D) Code; a digital code embedded in a presentation or image; a digital code represented by presentation or image; any other encoding using images; or any other encoding capable of being presented on the display 104a and decoded from the presented encoding when captured.

In some example embodiments, the means for comparing the first hash and the second hash further comprises: means for calculating a distance between the first hash and second hash; and means for determining the first hash and second hash are at least substantially matching when the distance is less than or equal to a predetermined distance threshold or error threshold.

In some example embodiments, the distance is one or more from the group of: a hamming distance between the first and second hash; a Euclidean distance between the first and second hash; or any other distance metric between the first and the second hash used by a hashing algorithm that generates the first and the second hash.

In some example embodiments, the first hash and the second hash are generated using a hashing algorithm based on one or more hashing algorithms from the group of: an Average Hashing (aHash) algorithm; a Median Hashing (mHash) algorithm; a Perceptual Hashing (pHash) algorithm; a Difference Hashing (dHash) algorithm; a Block Hashing (bHash) algorithm; a Wavelet Hashing (wHash) algorithm; a ColorMoment Hashing algorithm; a Color Hashing (Colorhas) algorithm; a Marr-Hildreth (marrhildreth) hashing algorithm; a fuzzy hashing algorithm; a video hashing algorithm; a locality-sensitive hashing algorithm; a machine learning hashing algorithm; a pair of machine learning hashing models; or any other hashing algorithm configured for generating a hash from one or more images.

In some example embodiments, wherein: the hashing algorithm used for generating the first hash and the second hash is the same hashing algorithm; or the hashing algorithm used for generating the first hash and the second hash are similar or different hashing algorithms that generate the same hash.

In some example embodiments, the digital code further includes data representative of a seed associated with the digital signature, wherein the seed is used by a digital signature algorithm for verifying whether the digital signature is legitimate or valid.

In some example embodiments, the presentation is associated with a prompt or request from a service for user action or information from the user of the apparatus and/or a user device of the user using the service, and the means for sending an indication to the user further comprising: means for providing an indication to the user via the apparatus or the user device as to whether to perform the prompt or request for user action or information on the apparatus or the user device, respectively, based on whether the digital signature from the service is legitimate or valid and in response to the first and the second hashes substantially matching.

In some example embodiments, wherein a request for user action or information includes one or more from the group of: a request from a service requiring input from or action by the user; a request for the user to enter sensitive user information; a request for user for scanning sensitive information; a request for user for scanning a user passport, user photo, or contactless credit card; a request for user credentials or login credentials from the user; a request for confidential information of or associated with the user; a request for organizational information associated with the user; a request for the user to accept and/or proceed with installation of software on the user device; a dialogue request related to downloading, accepting and/or opening file attachments received from the service; or any other request requiring user input on the user device via a client service application associated with the service.

In some example embodiments, the apparatus comprises at least: at least one processor; and at least one memory storing instructions that, when executed by the at least one processor, cause the performance of the apparatus.

In a second aspect, this specification describes a method comprising: capturing a presentation presented on a display to a user, wherein the presentation includes data representative of a first hash; generating a second hash from the captured presentation; reading a digital code from the display or the captured presentation, the digital code comprising the first hash associated with the presentation and a digital signature associated with the first hash; comparing the first hash and second hash; and sending an indication to the user as to whether the digital signature is legitimate or valid in response to the first and second hashes at least substantially matching.

In a third aspect, this specification describes a computer program comprising instructions for causing an apparatus to perform at least the following: capturing a presentation presented on a display to a user, wherein the presentation includes data representative of a first hash; generating a second hash from the captured presentation; reading a digital code from the display or the captured presentation, the digital code comprising the first hash associated with the presentation and a digital signature associated with the first hash; comparing the first hash and second hash; and sending an indication to the user as to whether the digital signature is legitimate or valid in response to the first and second hashes at least substantially matching.

In a fourth aspect, this specification describes an apparatus for a service comprising: means for generating a presentation and digital code associated with requesting a user action or information at a user device using the service, wherein the digital code comprises a hash associated with the presentation and a digital signature associated with the hash; and means for sending a request for the user action or information to the user device, wherein the request comprises data representative of the presentation and digital code for display on the user device to authenticate the request from the service by the user.

In a fifth aspect, this specification describes a method for a service apparatus comprising: generating a presentation and digital code associated with requesting a user action or information at a user device of a user using a service, wherein the digital code comprises a hash associated with the presentation and a digital signature associated with the hash; and sending a request for the user action or information to the user device, wherein the request comprises data representative of the presentation and digital code for display on the user device to authenticate the request from the service by the user.

In a sixth aspect, this specification describes an apparatus comprising: means for receiving a request for user action or information at the user apparatus of a user from a service, the request for user action comprising data representative of a presentation and a digital code for display on the user device for authenticating the request from the service, wherein the presentation and digital code are generated by the service, the digital code comprising a hash of the presentation and a digital signature associated with the hash; means for displaying the presentation and the digital code on the user apparatus; means for performing a visual integrity check of the request using the displayed presentation and the digital code; means for receiving an indication whether the digital code and the presentation are authentic or legitimate; in response to the indication of the digital code and presentation being authentic or legitimate, means for notifying the user to perform the requested user action; and in response to the indication of the digital code and the presentation being unauthentic or illegitimate, means for notifying the user to reject performing the requested user action.

In some embodiments, the mean for performing the visual integrity check of the request further comprises means for using another user apparatus caused to perform the visual integrity check based on capturing the display of the presentation and the digital code presented on the display of the user apparatus, wherein the another user apparatus is separate from the user apparatus.

In some embodiments, the means for performing the visual integrity check of the request further comprises means for performing the visual integrity check on the user apparatus, wherein the user apparatus further comprises means for performing the visual integrity check based on capturing a screenshot of the presentation and the digital code presented on the display of the user apparatus.

In some embodiments, the means for performing the visual integrity check further comprises: means for capturing a presentation presented on a display to the user, the presentation associated with a first hash; means for generating a second hash from the captured image; means for reading a digital code from the display or the captured image, the digital code comprising the first hash associated with the presentation and a digital signature associated with the first hash; means for comparing the first hash and the second hash; and means for sending an indication to the user as to whether the digital signature is legitimate in response to the first hash and the second hash are at least substantially matching.

In some example embodiments, the presentation is associated with a prompt or request from the service for user action or information from the user of the user apparatus using the service, and the means for sending the indication to the user further comprises: means for providing an indication to the user as to whether to perform the prompt or request for the user action or information on the user apparatus based on whether the digital signature from the service is legitimate or valid in response to the first hash and the second hash substantially matching.

In some example embodiments, the visual integrity check is performed according to the functionality of the first and/or second aspects and/or modifications thereof.

In some example embodiments, the means of the user apparatus at least comprise: at least one processor; and at least one memory storing instruction that, when executed by the at least one processor, cause the performance of the apparatus.

In a seventh aspect, this specification describes a method for a user apparatus comprising: receiving a request for a user action or information at the user apparatus from a service, the request for the user action or the information comprising data representative of a presentation and a digital code for displaying on the user device to a user for authenticating the request from the service, wherein the presentation and the digital code are generated by the service, the digital code comprising a hash associated with the presentation and a digital signature associated with the hash; displaying the presentation and the digital code on the user apparatus to the user; performing a visual integrity check of the request using the displayed presentation and the digital code; receiving an indication whether the digital code and the presentation are authentic or legitimate; in response to the indication of the digital code and the presentation being authentic or legitimate, notifying the user to perform the requested user action; and in response to the indication of the digital code and the presentation being unauthentic or illegitimate, notifying the user to reject performing the requested user action.

In an eighth aspect, this specification describes a system comprising: a server apparatus providing a service according to the fourth aspect; and a user apparatus according to the sixth aspect, wherein the server apparatus providing the service and the user apparatus communicate over a network when the user uses said service via the user apparatus.

In some embodiments, the user apparatus comprises means for performing a visual integrity check according to any of the features and/or functionality of the first and/or second aspects in response to the user apparatus receiving a request from the service and displaying the presentation and the digital code associated with the request.

In some example embodiments, another user apparatus according to the features and/or functionality of the first and/or second aspects, wherein the another user apparatus comprises means for performing a visual integrity check in response to the user apparatus receiving a request from the service and displaying the presentation and the digital code associated with the request.

In another aspect, the specification relates to embodiments of a non-transitory computer readable medium comprising program instructions stored thereon for performing at least the following: capturing a presentation presented on a display to a user, wherein the presentation includes data representative of a first hash; generating a second hash from the captured presentation; reading a digital code from the display or the captured presentation, the digital code comprising the first hash associated with the presentation and a digital signature associated with the first hash; comparing the first hash and second hash; and sending an indication to the user as to whether the digital signature is legitimate or valid in response to the first and second hashes at least substantially matching.

In a further aspect, the specification relates to embodiments of a non-transitory computer readable medium comprising program instructions stored thereon for performing at least the following: generating a presentation and digital code associated with requesting a user action or information at a user device of a user using a service, wherein the digital code comprises a hash associated with the presentation and a digital signature associated with the hash; and sending a request for the user action or information to the user device, wherein the request comprises data representative of the presentation and digital code for display on the user device to authenticate the request from the service by the user.

### Brief Description of the Drawings

Various example embodiments will now be described by way of non-limiting example, with reference to the accompanying drawings, in which:
FIG. 1a is a schematic view of an example visual integrity check system for understanding example embodiments;
FIG. 1b is a schematic view of another example visual integrity check system for understanding example embodiments for understanding example embodiments;
FIG. 1c is a schematic diagram illustrating an example of visual integrity checking for understanding example embodiments;
FIG. 2a is a flow diagram illustrating an example service visual integrity check method for understanding example embodiments;
FIG. 2b is a flow diagram illustrating an example user device visual integrity check method for understanding example embodiments;
FIG. 2c is a flow diagram illustrating an example visual integrity check method for the user device or an external apparatus for understanding example embodiments;
FIG. 3a is a signal flow diagram illustrating an example visual integrity check signal flow for performing a visual integrity check by a user on a request for user action from a service as illustrated in FIG. 1a for understanding example embodiments;
FIG. 3b is a signal flow diagram illustrating another example visual integrity check signal flow for performing a visual integrity check by a user on a request for user action from a service as illustrated in FIG. 1b for understanding example embodiments;
FIG. 4 is a flow diagram illustrating further example visual integrity check system for use by a user with a user device and a mobile device for performing a visual integrity check for understanding example embodiments;
FIG. 5 is a schematic view of an example apparatus for understanding example embodiments; and
FIG. 6 is a schematic view of an example computer-readable medium for understanding example embodiments.

### Detailed Description

The scope of protection sought for various embodiments of the invention is set out by the claims. The embodiments and features, if any, described in the specification that do not fall under the scope of the independent claims are to be interpreted as examples useful for understanding various embodiments of the invention.

In the description and drawings, like reference numerals refer to like elements throughout.

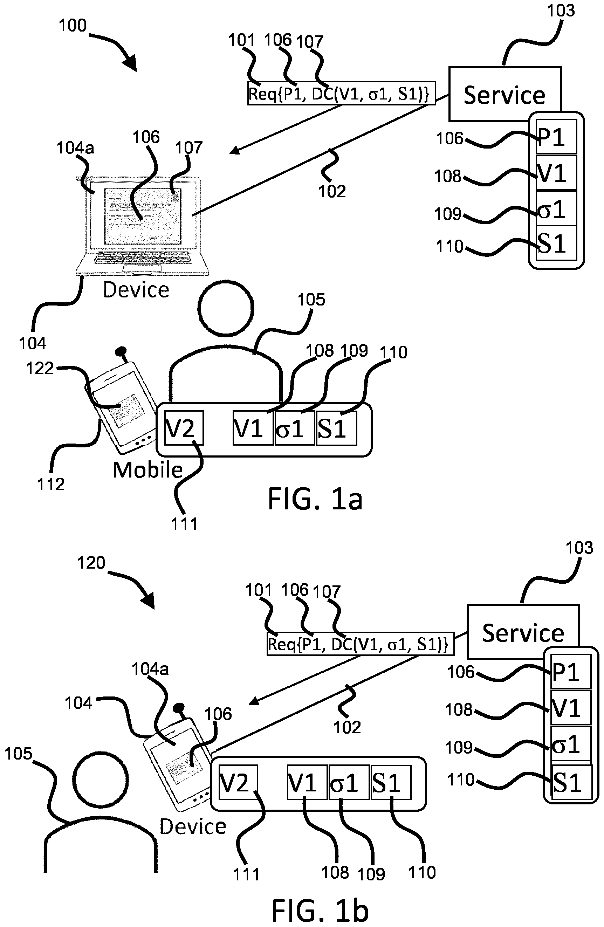

FIG. 1a illustrates an example visual integrity check (VIC) system and process 100 for use in verifying the authenticity of a service request 101 communicated over a communication channel 102 from a service 103 to a user device 104 of a user 105. The service request 101 may be a request 101 from the service 103 to the user 105 and/or the user device 104 for requesting action by or requesting information from the user 105 of the user device 104. The service request 101 is presented on a display 104a of the user device 104 to the user 105. The service 103 may be implemented on one or more servers remote from the user device 104, where the user 105 accesses the service 103 via a client service application (or client application (app)) on the user device 104. The client application is associated with the service 103 and/or one or more services provided to the user 105. During operation of the client application on the user device 104 by the user 105, the client application communicates with service 103 over the communication channel 102.

For example, the service 103 sends one or more service requests 101 for action or information to the client application of the user 105, which require user input. Each service request 101 for action or information may be, without limitation, for example, a request from the service 103 requiring input from or action by the user 105; a request for user 105 to enter sensitive user information; scanning sensitive information such as a user passport, user photo, and/or contactless credit card and the like; a request for login credentials from the user 105; a request for confidential information of or associated with the user 105; a request for organizational information associated with the user 105; a request for the user 105 to accept and/or proceed with installation of software on the user device 104; a dialogue request related to downloading, accepting and/or opening file attachments received from the service 103; and/or any other request requiring user input 105 on the user device 104 via the client service application associated with service 103 as the application demands, or any combination thereof.

The user device or apparatus 104 may comprise or represent any computing device of the user 105 that is capable of displaying at least a presentation 106 and/or digital code 107 associated with the service request 101. For example, the user device or apparatus 104 may include, without limitation, for example a mobile communication device, a smart phone, mobile phone, tablet, a laptop, a personal computer, a television, a bank terminal, a vehicle display, a virtual reality (VR) display, an augmented reality display, an electronic billboard, a display device, any public/shared devices capable of displaying the service request 101 and presentation 106/digital code 107, and/or any other computing device capable of displaying the service request 101, the presentation 106 and/or the digital code 107, or any combination thereof.

In the example VIC system 100, the service 103 generates the presentation 106 (e.g., p1) associated with the service request 101 and a digital code 107 (e.g., DC) associated with the service request 101, where the service request 101 is for requesting a user action / information from user 105 at a user device 104 when using the service 103. The user action may include, without limitation, for example a requirement for the user to accept/approve information and/proposed action, a requirement for the user to enter user credentials; a requirement for user to enter sensitive information; a requirement for user to download and/or install software and/or software updates; a requirement for user to open an attachment and/or sign an attachment; any other request requiring the user to enter data and/or provide permission for the user device 104 to perform a function or process associated with the service request 101, or any combination thereof.

The service 103 uses a hashing-based algorithm that generates a first hash 108 (e.g., v1) of the presentation 106, the service 103 also generates a digital signature 109 (e.g., σ1) associated with the first hash 108, and in some implementations also a seed 110 (e.g., S1) associated with the digital signature 109. The service 103 generates the digital code 107 by digitally encoding the first hash 108 (e.g., v1) of the presentation 106, the digital signature 109 (e.g., σ1) associated with the first hash 108, and in some implementations the seed 110 (e.g., S1) associated with the digital signature 109. The service 103 sends the service request 101 including data representative of the presentation 106 and digital code 107 over the communication channel 102 to the user device 104 of the user 105.

The user device 104 receives the service request 101 for user action / information by the user 105 that is sent from the service 103 over the communication channel 102. The service request 101 including data representative of the presentation 106 and the digital code 107 for display on the user device 104 for authenticating the service request 101 received from the service 103. The user device 104 displays the presentation 106 associated with the service request 101 on the display 104a of the user device 104. The user device 104 also displays the digital code 107 on the display 104a of the user device 104. The presentation 106 and the digital code 107 may be displayed on the display 104a of the user device 104 at the same time or substantially simultaneously. Alternatively, the presentation 106 and the digital code 107 may be displayed on the display 104a of the user device 104 at different times, e.g., sequentially and/or by separate requests from the user 105. For example, the digital code 107 may be displayed before the presentation 106 is displayed, and once the digital code 107 is read/captured and/or decoded, the presentation 106 may be displayed for capturing. Alternatively, the presentation 106 may be displayed before the digital code 107, and once the presentation 106 is captured, the digital code 107 is displayed for capture/reading and decoding.

In this example, the user device 104 performs a visual integrity check (VIC) process in relation to the service request 101 based on the display of the presentation 106 and the digital code 107 associated with the service request 101 to the user 105 on the display 104a of the user device 104. In this example, the VIC process is implemented on or performed at an external apparatus or second user device 112 accessible to the user 105, which provides an indication whether the service request 101 is legitimate/authentic or not based on capturing the presentation 106 and digital code 107 displayed on the user device 104 at the second user device 112. The external apparatus or second user device 112 may be any type of device capable of capturing the display 104a of the user device 104. For example, the external apparatus or second user device 112 with an imaging component (e.g., a camera sensor) and communication means, comprises, without limitation, for example a digital camera, a mobile communication device, a smart phone, a laptop, a personal computer with a camera (e.g., webcam), a video camera, and/or any other computing device capable of capturing the display 104a of the user device 104, or any combination thereof. In some examples, the second user device 112 may be the user device 104 as described with reference to FIG. 1b.

The second user device 112 uses the captured presentation 122 and the captured digital code to verify whether the service request 101 is legitimate / authentic or not. In an example, the second device 112 sends an indication of the service request 101 being legitimate / authentic to the user device 104, which is displayed to the user 105 and the user 105 may proceed based on this indication. Alternatively, the second device 112 displays on a display of the second device 112 whether the service request 101 is legitimate / authentic or not based on the VIC process performed at the second device 112. The user 105 may view the indication displayed on the second user device 112 and proceed to action the service request 101 accordingly. In some use cases, the action is a manual manipulation by the user 105 and/or input to the user device 104.

In this example, the second user device 112 includes a VIC application and/or a VIC apparatus operating on the second user device 112 that are configured for performing the VIC process on the second user device 112. For example, the second user device 112 includes functionality for performing the VIC process in a trusted environment of the second user device 112. The VIC process may be implemented based on, without limitation, for example the VIC application operating on the second device 112 in a sandboxed or trusted environment of the second device 112, the VIC apparatus or componentry operating on a trusted hardware module of the second device 112, and/or functionality of the VIC operating within an operating system of the second device 112 or operating system component of the second device 112. This provides the advantage of reducing the risk of the VIC process being maliciously altered and/or changed by a third party and increases the trustworthiness of the VIC indication that is output from the VIC process when the VIC process is performed by the second user device 112.

The VIC process includes the second user device 112 capturing the presentation 106 displayed on the display 104a of the user device 104 as a captured presentation 122. The captured presentation 122 may be displayed on the second user device 112 for clarity and an indication of successful capturing. The second user device 112 also captures the digital code 107 presented on the display 104a of the user device 104 for decoding into the first hash 108, digital signature 109 and/or the seed 110 (or other required information in the digital code 107) that is encoded by the digital code 107. The second user device 112 has the captured presentation 122 and the decoded first hash 108, digital signature 109 and/or the seed 110. The captured presentation 122 includes data representative of the first hash 108. The second user device 112 uses a hashing algorithm to process the relevant portions of the captured presentation 122 to generate a second hash 111 (e.g., v2) associated with presentation 106. The hashing algorithm used by the second device 112 is the same and/or substantially similar type of hashing algorithm that was used by the service 103 when generating the first hash 108 of the presentation 106. The type of hashing algorithm that the second user device 112 should use and any other hashing parameters/keys may be communicated as additional information in the digital code 107 from the service 103. The VIC process of the second user device 112 compares the first hash 108 (e.g., v1) with the second hash 111 (e.g., v2).

The VIC process of the second user device 112 determines whether the first and second hashes 108 and 111 at least substantially match each other. For example, the comparison that is performed by the second user device 112 may include computing a distance between the first hash 108 and the second hash 111, where when the distance between the first and second hashes 108 and 111 is within a predetermined threshold, then the first and second hashes 108 and 111 are considered to substantially match. The distance may be computed based on a distance metric associated with the type of hashing algorithm used by the service 103 and/or second user device 112. The predetermined distance threshold and/or type of distance metric used for the comparison may also be communicated via the digital code 107 from the service 103. Alternatively, the distance metric and/or the distance threshold may be set by the user of the second user device 112 depending on the level of trustworthiness the user 105 is prepared to accept.

In another example, the first hash 108 of the presentation 106 may be generated based on text within the presentation 106 using a hashing algorithm that processes text and/or strings of characters. In this case, the second user device 112 detects and generates text and/or a string of characters from the captured presentation 122 (e.g., using optical character recognition) and generates the second hash 111 using the hashing algorithm on the generated text and/or the string of characters. In such a case, the comparison may detect whether the first and the second hashes 108 and 111 exactly match.

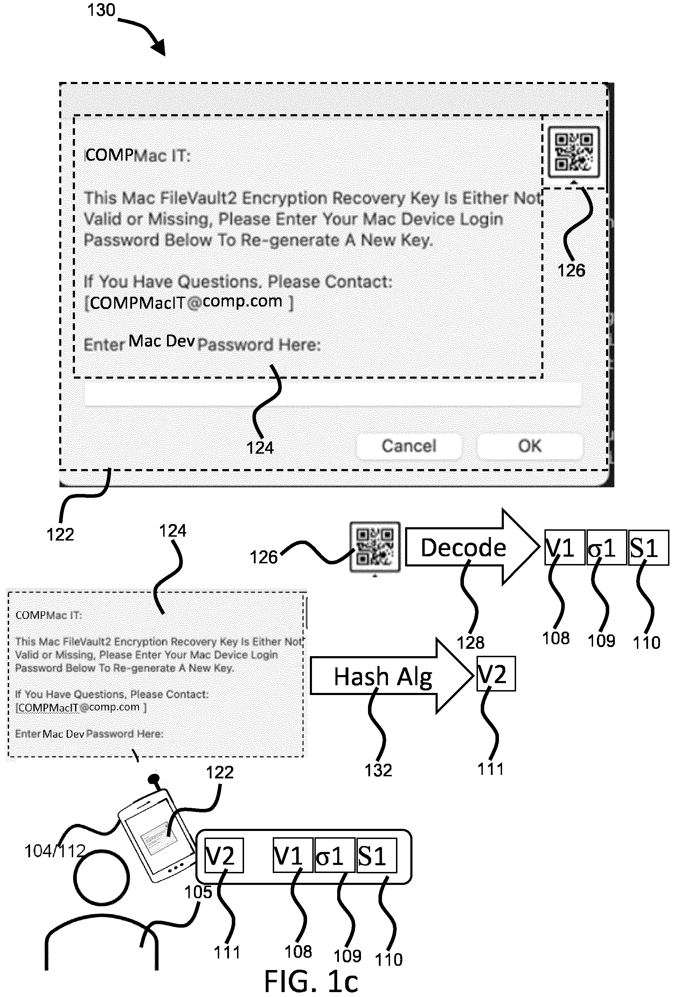

In another example, the first hash 108 of the presentation 106 may be generated based on an image of a user prompt 130 as described with reference to FIG. 1c within the presentation 106 using a hashing algorithm that processes images. In this case, the second user device 112 detects and generates an image of the user prompt 130 from the captured presentation 122 and generates the second hash 111 using the hashing algorithm on the generated image of the user prompt 130. In such a case, the comparison may detect whether the first and the second hashes 108 and 111 at least substantially match each other. For example, the comparison that is performed by the second user device 112 may include computing a distance between the first hash 108 and the second hash 111, where when the distance between the first and second hashes 108 and 111 is within a predetermined threshold, then the first and second hashes 108 and 111 are considered to substantially match (i.e., the image of the user prompt used to generate the first hash 108 substantially matches the generated image of the user prompt from the captured presentation used to generate the second hash 111). The distance may be computed based on a distance metric associated with the type of hashing algorithm used to process hashes of images by the service 103 and/or second user device 112. The predetermined distance threshold and/or type of distance metric used for the comparison may also be communicated via the digital code 107 from the service 103.

Once the VIC process determines that the first and second hashes 108 and 111 substantially match (or exactly match), the second user device 112 uses the digital signature 109 and seed 110 to determine whether the digital signature 109 is legitimate. If both the digital signature 109 is determined to be legitimate and the first and second hashes substantially match, then the second user device 112 determines that the service request 101 is legitimate / authentic. If either a) the first and second hashes 108 and 111 are determined to not substantially match (e.g., the distance is greater than the predetermined threshold, or the first and second hashes do not match); or b) the digital signature 109 is determined to be illegitimate / unauthentic, then the VIC process of the second user device 112 determines that the service request 101 is illegitimate / unauthentic. The VIC process indicates whether the service request 101 is legitimate or not. The second user device 112 may indicate or render a VIC indication to the user 105 (e.g., a positive flag or tick indicating service request 101 is legitimate, or a negative flag or cross indicating service request 101 is illegitimate). Once the VIC indication is displayed and/or is known to the user 105, the user 105 can take appropriate action in relation to the service request 101 on the user device 104 whilst using the service 103. For example, if the VIC indication indicates the service request 101 is legitimate, the user 105 of the user device 104 may action the service request 101 such as, without limitation, for example entering user credentials (e.g., entering user login and password), providing the requested information (e.g., entering sensitive user information or corporate information), performing the requested action (e.g., downloading/installing software updates or opening an attachment etc.), or accepting a prompt (e.g. pressing a related button and/or inputting requested information) rendered in the presentation 106 on the display 104a, or any combination thereof.

In another example, when the second user device 112 performs the VIC of the service request 101 using the presentation 106 and digital code 107, the second user device 112 may send the VIC indication on whether the presentation 106 and digital code 107 and hence the service request 101 are authentic or legitimate to the user device 104. On receiving the VIC indication of whether the service request 101 are authentic or legitimate (e.g., both the digital code and presentation are determined to be authentic or legitimate), the user device 104 may render, e.g. display, the VIC indication to the user 105 of the user device 104. For example, in response to the indication of the digital code 107 and presentation 106 and hence the service request 101 being authentic or legitimate, the user device 104 may notify the user 105 that the request 101 is from a trusted source and so the user 105 may perform the requested user action of the service request 101 from the service 103. Alternatively, in response to the VIC indication of the digital code 107 and presentation 106 and hence the service request 101 being unauthentic or illegitimate, the user device 104 may notify the user 105 that the request 101 should not be trusted and the user 105 should reject performing the requested user action of the service request 101.

The presentation 106 may include, without limitation, for example an image for presenting on the display 104a of the user device 104 of the user 105, a plurality of images for presenting on the display 104a of the user device 104; a video or multimedia for presenting on the display 104a of the user device 104; data representative of a user prompt associated with the service request 101 or dialog for rendering on the display 104a of the user device 104, textual information for presenting on the display 104a of the user device 104, and/or any other information for presenting on the display 104a of the user device 104, or any combination thereof, and capable of being used to generate the first hash 108 by the service 103.

In an example, the presentation 106 is an image generated by the service 103, which may be an image associated with the service request 101. For example, the image 106 may be representative of the service request 101 or how the service request 101 will be rendered and/or presented/displayed to the user 105 on a display 104a of the user device 104. The presentation 106 may be an user prompt, interactive prompt or dialog box (e.g., graphical user interface (GUI) element) requesting user action and/or information. For example, in some applications, the GUI element can be generated by the service 103 at the service side (e.g., via simulation or pre-rendering at the service end). Alternatively, the presentation 106 may be generated from an image captured on the user device 104, which the user device 104 shares with the service 103, where the service 103 generates the digital code (e.g., a QR code) for sending to the user device 104 for presentation to the user 105 by the user device 104 on the display 104a of the user device 104.

The presentation 106 that is generated by the service 103 comprises one or more of: an image, video, graphics, text, other imaging data, and/or a rendered user prompt associated with the service request 101 or dialog check box (e.g., GUI elements), or any combination thereof. The first hash 108 may be generated from the presentation 106 using a hashing algorithm capable of generating a hash from the image, video, text, graphics, other imaging data, and/or the rendered user prompt associated with the service request 101 or dialog check box (e.g., GUI elements) and the like, or any combination thereof. For example, the hashing algorithm is used for generating the first hash 108 from the presentation 106, and the same or a substantially similar hashing algorithm is used for generating the second hash 111 from the captured presentation 122. As an example, when the presentation 106 comprises one or more of images, video, graphics, text, any other imaging data, or any combination thereof, the first hash 108 and second hash 111 can be generated using a hashing algorithm based on, without limitation, for example one or more hashing algorithms from the group of: an Average Hashing (aHash) algorithm; a Median Hashing (mHash) algorithm; a Perceptual Hashing (pHash) algorithm; a Difference Hashing (dHash) algorithm; a Block Hashing (bHash) algorithm; a Wavelet Hashing (wHash) algorithm; a ColorMoment Hashing algorithm; a Color Hashing (Colorhas) algorithm; a Marr-Hildreth (marrhildreth) hashing algorithm; a fuzzy hashing algorithm; a video hashing algorithm; a locality-sensitive hashing algorithm; a machine learning hashing algorithm; a pair of machine learning hashing models; or any other hashing algorithm configured for generating a hash from one or more images, or any combination thereof. In such a case, a distance metric may be used (e.g., hamming distance and/or Euclidean distance, or other distance metric associated with the hashing algorithm) to determine or estimate the distance between the first hash 108 and the second hash 111. When the determined or estimated distance is less than or equal to a predetermined distance threshold or error threshold, then the first and second hashes 108 and 111 are considered to be at least substantially matching. When the determined or estimated distance is greater than the predetermined distance threshold or error threshold, then the first and second hashes 108 and 111 are considered not substantially match or are not matching.

As described, the hashing algorithm used for generating the first hash 108 associated with the presentation 106 and/or the second hash 111 associated with the captured presentation 122 may be based on machine learning (ML) models and/or ML algorithms. For example, a Siamese neural network may be trained and used to compare the first hash 108 associated with the presentation 106 and the second hash 111 associated with the captured presentation 122. Alternatively, rather than using hashes 108 and 111, the captured presentation 122 may be sent from the second user device 112 to the user device 104 in which a trained Siamese neural network is used to distinguish whether the captured presentation 122 is the same, or at least substantially matching, as the presentation 106 presented on the display of the user device 104. Alternatively, the presentation 106 may be sent from the user device 104 to the second user device 112 in which a trained Siamese neural network is used to distinguish whether the captured presentation 122 is the same, or at least substantially matching, as the presentation 106 presented on the display of the user device 104. This may be used to determine whether the captured presentation 122 substantially matches the presentation 106. The output of each network may be compared with a Euclidian distance or other distance metric. Alternatively, the output of the Siamese neural network may be a classification indicating match or no match (e.g., true, or false), where the distance comparison is performed within the Siamese neural network.

The digital code 107 may comprise, without limitation, for example data representative from one or more digital codes from the group of: a bar code; a two-dimensional matrix bar code; a Quick Response, QR, code; a High Capacity Colored two-Dimensional, HCC2D, Code; a digital code embedded in the presentation 106 or an image; a digital code represented by presentation 106 or an image; or any other digital code that encodes the first hash 108, digital signature 109 and seed 110 and can be decoded from data captured during the VIC process from the display 104a of the user device 104 when the presentation 106 and digital code 107 are displayed on the display 104a of the user device 104, or any combination thereof.

The digital code 107 includes at least data representative of the first hash 108, the digital signature 109 and seed 110 associated with the digital signature 109. The digital signature 109 and seed 110 embedded or encoded within the digital code 107 are used as an additional verification to check that the first hash 108 and/or also the service request 101 associated with the digital code 107 were generated by the service 103. In this case, the service 103 includes a seed 110 into the digital code 107, which may be a unique seed each time a service request 101 is generated, and/or which changes periodically or aperiodically. The seed 110 is used to strengthen the digital signature 109. For example, the seed 110 (e.g., S1) is a unique string generated by the service 103 to introduce more meta information which brings uniqueness per invocation, per user, per day, etc. The seed 110 provides the further advantage of reducing potential replay-attacks or spoofing of the presentation 106 and/or digital code 107. For example, the seed 110 may be based on a timestamp of the generated digital signature 109 and/or with an expiration time in which the digital signal 109 is considered invalid. The seed 110 may be further combined with a version number and a salt generated by a secure random number generator for further security. Other examples of seeds include metadata about the company providing the service 103 or a username of the target user 105. This meta-data can be shown in a textual format on the second user device 112 with strong cryptographic properties.

As the service request 101 and presentation 106 (e.g., a dialog) may be sent to multiple users there is a risk that a replay-attack exists where the presentation 106 shown to a first user (e.g., user A) may be observed by an adversary K. Then, adversary K has a time window before the same presentation 106 (e.g., a dialog) is shown to a second user (e.g., user B) to plant their attack. The seed 110 mitigates this problem as the seed contains useful meta-data such as the expiration date, version number, etc., ensuring that the digital signature 109 (e.g., σ1) does not remain valid for too long.

In another example, the presentation 106 that is generated by the service 103 may be based on text or other non-image data, such as a message associated with the service request, a user prompt or dialogue associated with the service request 101 used in the user prompt or other phrase, paragraph or sentence and the like, or any combination thereof. In this case, the first hash 108 may be generated from the text or non-image data of the presentation 106 using a hashing algorithm capable of generating a hash from the text or non-image data of the presentation. The captured presentation 122 of the presentation 106 presented on the display 104a of the user device 104 may be further processed using, without limitation, for example optical character recognition to generate the text or non-image data of the presentation 106 at the second user device 112. The second user device 122 then generates the second hash 111 by using the same or substantially similar hashing algorithm on the generated text or non-image data as was used by the service 103. For example, the hashing algorithm is used for generating the first hash 108 from the presentation 106, and the same or a substantially similar hashing algorithm is used for generating the second hash 111 from the captured presentation 122. As an example, when the presentation 106 includes text or non-image data, the first hash 108 and second hash 111 can be generated using a hashing algorithm associated with hashing text or non-image data based on, without limitation, for example one or more hashing algorithms from the group of: a non-perceptual hashing algorithm; a secure hashing algorithm (e.g., SHA-0, SHA-1, SHA-2, SHA-3, SHA-256, etc.); a password hashing algorithm (e.g., MD4, MD5, MD6, etc.), a cryptographic hashing function; a Blake based hashing algorithm; a Poseidon based hashing algorithm; a one-way hashing algorithm; any other hashing algorithm configured for generating a unique hash from text and/or non-image data, or any combination thereof. When hashing text or non-image data, a distance metric may not be necessary, rather a comparison for an exact match between the first and second hashes 108 and 111 may be performed. When there is an exact match, then first and second hashes 108 and 111 are considered to match and so are substantially matching. When there is not an exact match between the first and second hashes 108 and 111, then the first and second hashes 108 and 111 are not matching, and so do not substantially match.

For example, the service 103 is configured to generate the first hash 108 using a non-perceptual hashing algorithm from the text of the user prompt associated with the service request 101, where the presentation 106 of the text is an image of the text of the user prompt, which is sent in the service request 101 to the user device 104. During the VIC process, the image of the text of the presentation 106 that is displayed on the display 104a of the user device 104 is captured by the user device 112, where the user device 112 uses optical character recognition (OCR) on the captured image to generate the text. The second device 112 uses the non-perceptual hashing algorithm to generate the second hash 111 from the OCR'd text. The first and second hashes 108 and 111 are then compared. The text of the user prompt may include unique portions such that a unique first hash 108 is generated for each user. The text may also require a nonce and a signed hash, which are included in the digital code 107 sent from the service 103 to the user device 104.

FIG. 1b illustrates another example VIC system and process 120 for use in verifying the authenticity of a service request 101 communicated over a communication channel 102 from a service 103 to a user device 104 of a user 105. The VIC system and process 100 of FIG. 1a is further modified in that the VIC process is performed by the user device 104. In this example, the user device 104 performs the VIC process in relation to the service request 101 based on the display of the presentation 106 and the digital code 107 associated with the service request 101 to the user 105 on the display 104a of the user device 104.

For example, the VIC process is performed at a user device 104, which provides an indication whether the service request 101 is legitimate/authentic or not based on capturing the presentation 106 and digital code 107 displayed on the user device 104. The user device 104 may be any type of device capable of capturing the display 104a of the user device 104. For example, the user device 104 is capable of performing a screen capture or screenshot of the display 104a of the user device 104 when the presentation 106 and/or digital code 107 is displayed on the display 104a. The user device 104 uses the captured presentation and captured digital code to verify whether the service request 101 is legitimate / authentic or not. In an example, user device 104 displays a notification on the user device 104 whether the service request 101 is legitimate / authentic or not based on the VIC. The user 105 may view the notification displayed on the user device 104 and proceed to action the service request 101 accordingly.

In this example, the user device 104 includes the VIC application and/or the VIC apparatus operating on the user device 104 that are configured for performing the VIC process as described in FIG. 1a on the user device 104. For example, the user device 104 includes functionality for performing the VIC process in a trusted environment of the user device 104. The VIC process may be implemented based on, without limitation, for example the VIC application operating on the user device 104 in a sandboxed or trusted environment of the user device 104, the VIC apparatus or componentry operating on a trusted hardware module of the user device 104, and/or functionality of the VIC process operating within an operating system of the user device 104 or operating system component of the user device 104, or any combination thereof. This provides the advantage of reducing the risk of the VIC process being maliciously altered and/or changed by a third party and increases the trustworthiness of the VIC indication that is output from the VIC process. The VIC process may operate on the user device 104 in a similar manner as that described with reference to FIG. 1a.

Although the digital code 107 is described as being transmitted with the service request 101 by the service 103 for presentation on the display 104a of the user device 104 to the user 105, this is by way of example only and the VIC process is not so limited, it is to be appreciated by the skilled person that the digital code 107 may be an encryption of the first hash 108, digital signature 109 and seed 110 and/or other required information using a digital cryptographic algorithm, which may be transmitted to the user device 104 along with the service request 101. In this case, the digital code 107 does not need to be presented on the display 104a of the user device 104, but rather the VIC process of the user device 104 is instead configured to decrypt the received digital code 107 based on a corresponding digital decryption algorithm. Thus, the user device 104 may retrieve the first hash 108, the digital signature 109 and seed 110 by decrypting the digital code 107 once received. Only the presentation 106 need be presented to the user 105 via the display 104a of the user device 104. The VIC process includes the user device 104 capturing the presentation 106 displayed on the display 104a of the user device 106 as a captured presentation 122, where capturing uses, for example, functionality of screenshot or screen capture of the display 104a of the user device 104. Once the user device 104 has the captured presentation and the decrypted first hash 108, digital signature 109 and/or the seed 110, the VIC process proceeds in a similar manner as described with reference to FIG. 1a.

Although the VIC process may be implemented on the user device 104 or the second user device 112 as described in FIGs. 1a and 1b, this is by way of example only and the VIC process is not so limited, it is to be appreciated by the skilled person that the VIC process may be implemented on, without limitation, for example an apparatus, other hardware, software, on a chip, on a security dongle or Universal Serial Bus (USB) device, on a smart card with a chip, in a trusted execution environment (TEE) of the user device 104 and/or second user device 112, in a trusted platform module (TPM) of the user device 104 and/or second user device 112, in a secure environment of the user device 104 and/or second user device 112; and/or any other apparatus, hardware and/or software component that can provide a sandboxed, tamper resistance, secure and/or trusted environment.

The example VIC system 100 or 120 enables the user 105 of the user device 104 to easily authenticate or increase their perception of trust in a service request 101 sent from the service 103 and received at the user device 104 whilst the user 105 is using a service client associated with the service 103. The VIC system and system 100 provides the advantages of being a user-friendly authentication solution for each service request 101; minimising the risk of confusion/uncertainty for the user 105 trusting each service request 101; minimising user attention required to authenticate each service request 101; and being robust and reliable enough to minimize the security risk of each service request 101 being spoofed and the user 105 accidentally/inadvertently sharing sensitive user information or elevated credentials with malicious actors rather than the service 103.

FIG. 1c is a schematic diagram illustrating an example of a user prompt 130 associated with the service request 101 that is used for the VIC process as described with reference to FIGS. 1a and 1b. Similar or the same reference numerals that are used in FIGs. 1a and 1b are reused. In this example, it is assumed that the service request 101 includes a user prompt 130 as the presentation 106. The user prompt 130 may be generated at the service 103 and represented as an image, from which the first hash 108 is generated, where the image is sent as the presentation 106 in the service request 101 from the service 103 to the user device 104. Alternatively the user prompt 130 may be generated at the service 103, and an image is rendered and used for generating the first hash 108 at the service 103, but data representative of instructions, textual data, and/or a mark-up language, which can be used by the user device 104 in rendering an image of the user prompt 130 on the display, may be sent as the presentation 106 in the service request 101. In any event, once the service request 101 is received at the user device 104, the presentation 106 is displayed as user prompt 130 on the display 104a of the user device 104. As well, the digital code 107 that is sent in the service request 101 is also displayed as a digital code image on the display 104a of the user device 104. In this example, the digital code image is a QR code, which represents an encoding of the digital code 107 including the first hash 108, the digital signature 109 and the seed 110, and/or any other required information for verifying the first hash 108 and/or the digital signature 109 by the user device 104 and/or the second user device 112.

In this case, during the VIC process as described with reference to FIGS. 1a and 1b, the presentation 106 of the user prompt and the digital code image displayed on the display 104a of the user device 104 is captured by the second user device 112 as described in FIG. 1a or by the user device 104 as described in FIG. 1b. The captured presentation 122 forms a first image portion 124 representing a captured user prompt image of the user prompt 130 displayed on the display 104a and a second image portion 126 representing a captured digital code image displayed on the display 104a. For example, the captured presentation 122 is cropped to separate out the first image portion 124 and second image portion 126 to ensure the captured user prompt image is processed by the hashing algorithm 132 whilst ensuring the captured digital code image is not processed by the hashing algorithm 132. Hereinafter, the first image portion 124 is referred to as the captured user prompt image 124 and the second image portion 126 is referred to as the captured digital code image 126. The captured presentation 122 is processed to detect the user prompt 130 excluding the digital code image and cropped to generate a captured user prompt image 124 representing the user prompt 130 displayed on display 104a but excluding the digital code image displayed on display 104a. The captured presentation 122 is further processed to detect the digital code image excluding the user prompt 130 and cropped to generate a digital code image 126 representing the digital code image displayed on display 104a, where the captured digital code image 126 can be decoded using a decoding algorithm 128 (e.g., a QR decoding algorithm).

In this example, the captured presentation 122 of the user prompt 130 and digital code image includes a captured user prompt image 124 representing the user prompt image of the user prompt 130 and which is associated with the first hash 108 and a captured digital code image 126 associated with the digital code 107. The captured digital code image 126 is, for example, the captured QR code representing the digital code 107. The captured digital code image 126 is read and decoded by a QR reader/software 128 on the second device 112 to output the first hash 108 (e.g., v1), the digital signature 109 (e.g., σ1) and the seed 110 (e.g., S1) and/or other information required for verifying the first hash 108 and/or the digital signature 109.

The second hash 111 (e.g., v2) is generated by applying a hash algorithm 132 to the captured user prompt image 124 representing the user prompt 130. For example, as described with reference to FIGS. 1a or 1b, the VIC process may use a hash algorithm 132 for generating a hash from an image (e.g., a perceptual hash algorithm). The captured user prompt image 124 is processed by the hash algorithm 132 for generating the second hash 111 (e.g., v2) associated with the presentation 106 of the user prompt image generated by the service 103 when generating the first hash 108. As described with reference to FIGs. 1a and 1b, the first hash 108 (e.g., v1) and second hash 111 (e.g., v2) are compared to determine whether they at least substantially match each other. As well, the digital signature 109 associated with the first hash 108 is verified to be authentic based on the seed 110 (e.g., S1). A VIC indication indicating that the service request 101 is legitimate or authentic is sent if the first and second hashes 108 and 111 substantially match and the digital signature is authentic. A VIC indication indicating that the service request 101 is illegitimate or unauthentic is sent if the first and second hashes 108 and 111 are not substantially matching and/or the digital signature is unauthentic or invalid.

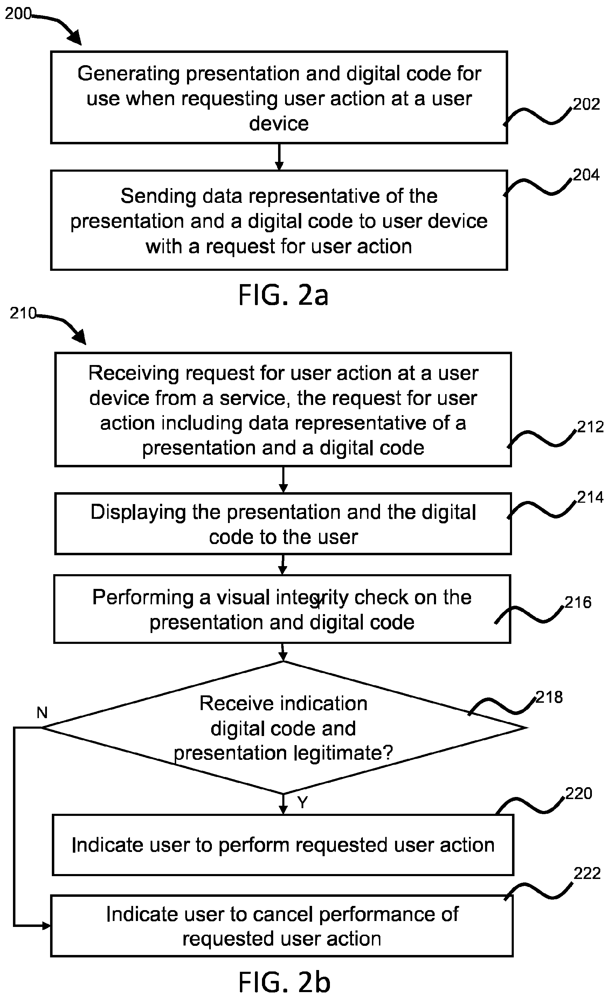

Although the example VIC system and process 100 or 120 are described with reference to a service 103 and a user 105 using the service 103 via a user device 104, this is by way of example only and the VIC system and process 100 or 120 is not so limited, it is to be appreciated by the skilled person that the VIC system/process 100 or 120 and/or as described herein with reference to FIGS. 2a to 4 can be used in client-server implementations and/or application specific implementations (e.g., apps in smart devices) and used by, without limitation, for example software as a service applications, email applications, retail services/website(s) and/or applications, any subscription service/application, online banking services/applications, social media platforms/applications, an Information Technology (IT) department applications, enterprise/organizational services and/or applications, operating system and/or mobile provider applications/services, and/or any other trusted source/service that the user 105 may use via their user device 104 and/or when responding to a service request from a service 103 accessible by the user 105.

For example, in a client-server implementation, the VIC system 100 or 120 includes a VIC server application associated with a service 103 operating on a server of a centralised or distributed server system and/or a cloud platform and the like, where a service client associated with the service 103 operates on the user device 104 of a user. As described with reference to FIGs. 1a or 1b, the VIC server application associated with the service 103 may perform the corresponding service-side (or server-side) steps of the VIC process 100 or 120 at the server operating the service 103 (e.g., prompt and generation of the first hash 108 etc.). As described with reference to FIGs. 1a or 1b, the VIC client application may perform the corresponding steps of the VIC process 100 or 120 on a second user device 106 or the user device 104 (e.g., capturing the user prompt and generation of second hash 111 etc.), and/or be incorporated into the service client on the user device 104. Application specific implementations may include the service using a VIC application for performing the service side operations of the VIC process 100 I 120, where a corresponding VIC application operates on the user device 104 and/or the second device 112 as described with reference to FIGs. 1a to 1c and/or as herein described.

FIG. 2a is a flow diagram illustrating an example service VIC process 200 for use by the service 103 or a server handling the service 103 of FIGS. 1a to 1c. References to similar of the same components of FIGs. 1a and 1b are reused where applicable. The service VIC process 200 performed by the service 103 or server handling the service 103 includes the following steps of:
In step 202, generating a presentation 106 associated with a service request 101 requesting user action at a user device 104 of a user 105, and generating a digital code 107 associated with the service request 101. The digital code 107 includes a first hash 108 associated with the presentation, a digital signature 109 and a seed 110 for verifying the digital signature. The presentation 106 may be an image associated with the request for user action, which may include, without limitation, for example a user prompt, an interactive user prompt, a GUI element and/or any other dialogue or image associated with the first hash 108. The user action may include, without limitation, for example a request for the user to enter user credentials; a request for user to enter sensitive information; a request for user to download and/or install software and/or software updates; a request for user to open an attachment and/or sign an attachment; any other request requiring the user to enter data and/or provide permission for the user device 104 to perform a function or process.

In an example, the presentation 106 including an image, interactive prompt, and/or GUI element etc., is generated by the service 103, which may simulate rendering of the image, interactive prompt, and/or GUI element at the service 103 and generating an image associated therewith based on the rendering.

In step 204, sending the service request 101 for the user action / information to the user device 104. The service request 101 includes data representative of the presentation 106 and the digital code 107 for presenting on the display 104a on the user device 104 to authenticate the service request 101 from the service 103 by the user 105.

Alternatively, steps 202 and 204 of service VIC process 200 may be further modified in which the service request 101 may be transmitted to the user device 104, which may render an image of the service request 101 on the display of the user device 104. The user device 104 may share or transmit a captured image of the displayed service request 101 to the service 103, which then generates the first hash 108 from the captured image. As well, the service 103 generates the digital code 107 including the first hash 108, digital signature 109 and/or seed 110. The digital code 107 is transmitted to the user device 104 for display on the user device 104 as a digital code image (e.g., a QR code or other digital code image).

FIG. 2b is a flow diagram illustrating an example user device VIC process 210 for use by the user device 104 of FIGS. 1a to 1c. References to similar of the same components of FIGs. 1a and 1b are reused where applicable. The user device VIC process 210 performed by the user device 104 includes the following steps of:
In step 212, receiving a service request 101 for user action at the user device 104 by a user 105 from a service 103. In an example, the service request 101 for user action includes data representative of a presentation 106 (e.g., an image) and a digital code 107 for display on the user device 104. The presentation 106 and digital code 107 for use in authenticating the service request 101 from the service 103. As described in FIGS. 1a to 2a, the service 103 generates a first hash 108 of the presentation 106, and generates the digital code 107 from at least the first hash 108 and a digital signature 109 associated with the first hash 108. Other information such as a seed 110 associated with the first hash 108 and/or for verifying the digital signature 109 may be included in the digital code 107.

The presentation 106 may be an image generated by the service 103 and the digital code 107 includes data representative of a first hash 108 of the image and a digital signature 109 associated with the first hash 108 and/or other information for verifying the first hash 108 and/or the digital signature 109 such as, for example, seed information 110.

In step 214, displaying the presentation 106 and digital code 107 on the user device 104. When the presentation 106 includes an image associated with the first hash 108, the image is displayed on the display 104a of the user device. In an example, the digital code 107 is displayed as a digital code image on the user device 104 in conjunction with the display of the image of the presentation 106. In another example, the digital code 107 may be displayed before or after display of the presentation 106 on the user device 104.

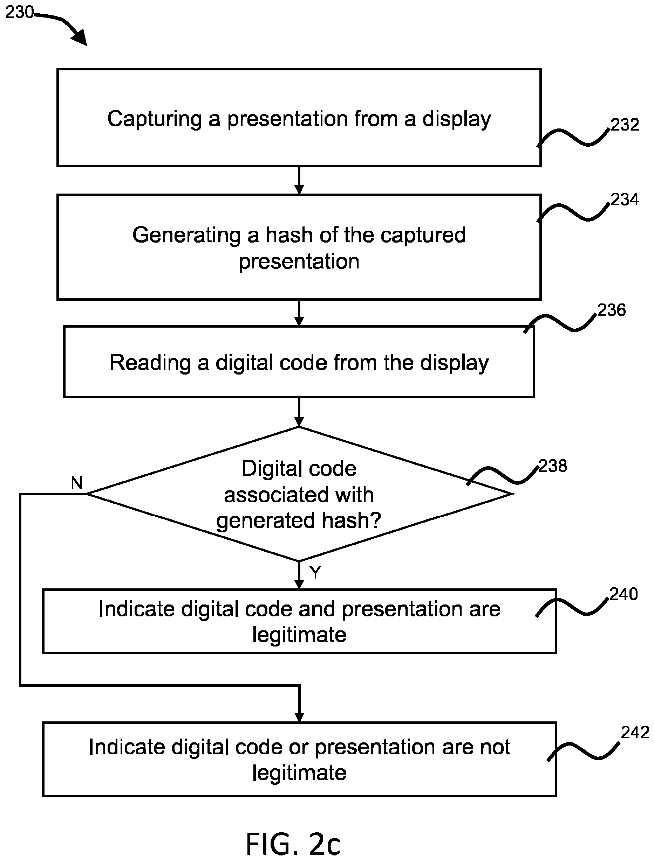

In step 216, a visual integrity check (VIC) process is performed on the service request 101 using the presentation 106 and the digital code 107. For example, the VIC process(es) as described with reference to FIGS. 1a to 1c may be performed by the user device 104 of the user 105 and/or an external apparatus or a second user device 112 of the user 105 or accessible to the user 105 that is separate to the user device 104 of the user 105. In another example, a VIC process 230 of FIG 2c may be performed. The VIC process may be performed on the user device 104. Alternatively, the VIC process may be performed on a second user device 112 of the user 105 or accessible by the user 105. In either case, the VIC process may output or send a VIC indication indicating whether the presentation 106 and the digital code 107 displayed on the user device 104 are legitimate or authentic.

In step 218, indicating or receiving data representative of the VIC indication indicating whether the digital code 107 and image 106 are authentic or legitimate. In response to the VIC indication indicating the digital code 107 and image 106 as being authentic or legitimate (e.g., 'Y'), proceeding to step 220, otherwise in response to the VIC indication indicating of the digital code and image being unauthentic or illegitimate (e.g., 'N') proceed to step 222.

In step 220, indicating to the user 105 of user device 104 that the user action of the service request 101 can be performed. For example, this may include the user device 104 notifying the user 105 of user device 104 to perform the requested user action in the service request 101. Alternatively, this may include a second user device 112 to indicate and/or notify the user 105 to perform the requested user action in the service request 101 on user device 104.

In step 222, indicating to the user 105 of the user device 104 to reject the service request 101 and cancel the performance of the requested user action or not perform the requested user action. For example, this may include the user device 104 notifying the user 105 of user device 104 to not perform or cancel performance of the requested user action in the service request 101. Alternatively, this may include a second user device 112 to indicate and/or notify the user 105 to not perform or cancel performance of the requested user action in the service request 101 on user device 104.

FIG. 2c is a flow diagram illustrating an example VIC process 230 performed by the user device 104 or an external apparatus or second user device 112. The reference numerals of FIGs. 1a and 1b are reused and/or referred to for the same or similar components. The VIC process 230 is performed, for example, in step 216 of the user device VIC process 210 of FIG. 2b, and/or by the VIC process as described with reference to FIGs. 1a to 1c. The VIC process 230 includes the following steps of:
In step 232, capturing a presentation 106 presented on a display 104a of a user device 104 used by a user 105 to form a captured presentation 122. The presentation 106 includes data representative of a first hash 108 generated by a hash algorithm at a service 103. For example, the presentation 106 may be an image associated with a service request 101 transmitted from the service 103 and/or data representative of the service request 101 for rendering as a user prompt, image and/or interactive user prompt on the display 104a of the user device 104. The presentation 106, when displayed or rendered on the display 104a of the user device 104, can be captured via an imaging function such as, for example, an imaging component or camera of an external device or second user device 112, a screenshot or screen save functionality of the user device 104a for capturing one or more portions of the display 104a of user device 104. The resulting captured image of the presentation 106 and/or the digital code 107 forms the captured presentation 122.

The captured presentation 122 may include data representative of the presentation 106 of the service request 101 and also the digital code 107 when displayed on the display 104a of the user device 104. This means the captured presentation 122 includes data representative of at least the first hash 108. When the digital code 107 is also captured, then the captured presentation 122 further includes data representative of at least the first hash 108, the digital signature 109 associated with the first hash 108 and a seed 110. The digital code 107 may further include additional information associated with the type of hashing algorithm or hashing parameters/keys used by the service 103 for generating the first hash 108, and/or the type of hashing algorithm the VIC process 230 should use for generating a second hash 111 based on the captured presentation 122.

In step 234, generating a second hash 111 from the captured presentation 122. In an example, the presentation 106 represents an image that was applied to a hashing algorithm by the service 103 to generate the first hash 108 of the image. The hashing algorithm is capable of generating the first hash 108 from the image of the presentation 106. The same or substantially similar hashing algorithm is used in step 234 for generating the second hash 111 from an image representing the captured presentation 122. The hashing algorithm may be any type of hashing algorithm for generating a hash from an image such as a perceptual hashing algorithm and the like as described with reference to FIGs. 1a to 1c. In another example, the presentation 106 may represent textual data or non-image data associated with the service request 101, which may include specific user data, where the service 103 uses a non-image based hashing algorithm to generate the first hash 108 from the textual data or non-image data. In this example, the captured presentation 122 includes an image representing the textual data or non-image data of the service request 101, where the captured presentation 122 is OCR'd to generate the textual data or non-image data (e.g., binary data), where the generated textual data is applied to the hashing algorithm to generate the second hash 111, where the hashing algorithm is the same or substantially similar to that used by the service 103. The hashing algorithm may be a non-image hashing algorithm such as, for example, a text or data hashing algorithm as described with reference to FIGs. 1a to 1c.

In step 236, reading the digital code 107 from the display 104a of the user device 104 or from the captured presentation 122. Once read, the digital code 107 is decoded to form data representative of the first hash 108, the digital signature 109 associated with the first hash 108 and the seed 110 associated with the digital signature 109. The digital code 107 may include further information associated with the first hash 108 and/or the digital signature 109 and the like (e.g., data representative of the type of hashing algorithm used to generate the first hash 108 and/or other information required by the second device 112 or user device 104 when performing the VIC process 230).

In step 238, determining whether the digital code 107 is associated with the second hash 111 based on comparing the first hash 108 with the second hash 111. If the first and second hashes 108 and 111 at least substantially match each other, then the second hash 111 is determined to be associated with the digital code 107. This is because the digital code 107 includes data representative of the first hash 108. When the hashing algorithm used to generate the first and second hashes 108 and 111 is an image based hashing algorithm (e.g., a perceptual hashing algorithm), the comparison between the first and second hashes 108 and 111 may be based on calculating a distance between the first and second hashes 108 and 111. If the calculated distance is within a predetermined distance threshold or error threshold, then the first and second hashes 108 and 111 are considered to be at least substantially matching. This may also be applied to non-image based hashing algorithms, e.g., text hashing algorithms, which may result in an exact match (i.e., identical) in which case the distance between the first and second hashes 108 and 111 is 0 and will be within or below the predetermined distance threshold or error threshold. If the distance is above the predetermined distance threshold or error threshold, then it is determined that the first and second hashes 108 and 111 are not substantially matching. For textual hash algorithms, this may be a strict threshold, where they are matching when the first and second hashes 108 and 111 are identical, and where they are not matching when the first and second hashes 108 and 111 are not identical. In addition, it is determined using a digital signature verification algorithm whether the digital signature 109 associated with the first hash 108 is valid or authentic based on the seed 110 read from the digital code 107.

In step 240, sending a VIC indication that indicates the digital code 107 and presentation 106 displayed on the user device 104 are legitimate or authentic in response to the digital signature 109 of the digital code 107 being legitimate or valid and the first and second hashes at least substantially matching.

In step 242, sending a VIC indication that indicates the digital code 107 or presentation 106 displayed on the user device 104 are illegitimate, unauthentic, or invalid in response to either a) the digital signature 109 of the digital code 107 being illegitimate or invalid; and/or b) the first and second hashes 108 and 111 at least not substantially matching.

The VIC process 230 may be performed by an external apparatus such as a second user device 112 and/or the user device 104 during the user device VIC process 210, which may proceed to step 218 using the indications or results of steps 240 or 242.

Further modifications may be applied, where in step 232, the captured presentation 122 includes a first image 124 representing the presentation 106 and associated with the first hash 108 and a second image 126 representing the digital code 107. In step 234, generating the second hash 111 of the captured presentation 122 includes applying a hashing algorithm to the first image for outputting the second hash 111. This may include performing an OCR on the first image 124 should the presentation 106 represent textual data, and applying the hashing algorithm to the generated textual data to output the second hash 111. In step 236, reading the digital code from the display 104a may further include processing the second image 126 using a digital decoding algorithm associated with the digital code 107 (e.g., when the digital code 107 is a QR code, then a QR reading algorithm may be applied to decode the encoded information within the digital code 107).

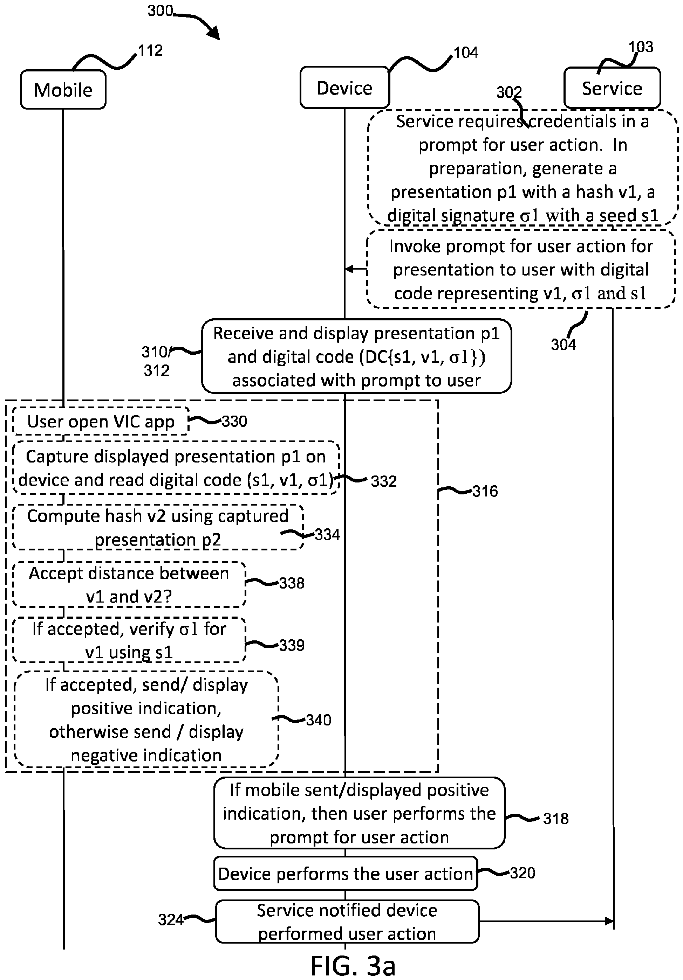

FIG. 3a is a signal flow diagram illustrating an example VIC signal flow 300 for performing a VIC by a user 105 on a service request 101 for user action / information from a service 103 as illustrated in FIG. 1a. The reference numerals of FIGs. 1a to 1c are reused and/or referred to for the same or similar components. In this example, the VIC signal flow 300 is performed using the service 103, the user device 104 and external apparatus or second user device 112 as described with reference to FIG. 1a. The service 103 may implement the functionality of the service VIC process 200 as described with reference to FIG. 2a and/or as described with reference to FIG. 1a. The user device 104 may implement the functionality of the user device VIC process 210 as described with reference to FIG. 2b and/or as described with reference to FIG. 1a. The external apparatus or second user device 112 may implement the functionality of the VIC process 230 as described with reference to FIG. 2c and/or as described with reference to FIG 1a. In this example, the user device 104 operates a service client application in communication with the service 103. The service client application provides functions and/or services to the user 105 that are associated with the service 103. The service 103 operates remotely on a server or cloud platform and the like and communicates with the service client application of the user device 104 over a communication channel 102 for providing services to the user 105. In this example, the service 103 requires credentials of the user 105 and so issues a service request 101 representing a prompt for a user action associated with the user 105 entering user credentials to login to the service 103 and/or for using some secure or subscription functionality associated with said service 103. In this case, before the user 105 enters the user credentials, the user 105 would like to know whether the service request 101 that is perceived to be received from service 103 is legitimate or not. If it is legitimate, then the user 105 can enter their user credentials more confidently in the knowledge the service request 101 is genuine and legitimate. Otherwise, the user 105 may reject the service request 101 and notify the service 103 or ignore the service request 101 until a genuine or legitimate service request 101 is received and verified by the VIC process as described herein. In this example, the VIC signal flow 300 includes the following operations of:
In operation 302, the service 103 determines that a service request 101 is required, for example, the service requires user credentials in order for service 103 for user to login into the service 103 and/or to provide secure or subscription based functionality to the corresponding service client application operating by a user 105 on the user device 104. The service 103 prepares a service request 101 including a user prompt for the user credentials. In preparing the service request 101, the service 103 generates a presentation 106 such as, for example, data representative of an image of the user prompt, and a first hash of the presentation or image (e.g., v1). The service 103 also generates a digital signature 109 (e.g., σ1) associated with the first hash 108 based on a seed (e.g., s1) 110 associated with the digital signature 109 or digital signature algorithm.

In operation, 304, the service 103 invokes a user prompt for user action for presentation to the user 105 on the display 104a of the user device 104, which includes sending the service request 101 to the user device 104 over communication channel 102, the service request 101 including data representative of the presentation 106 (e.g., an image or instructions for rendering the image) and a digital code representing the first hash 108, the digital signature 109 and the seed 110.

In operation, 310, the user device 104 receives the service request 101 data representative of the presentation 106 (e.g., an image or instructions for rendering the image) and a digital code representing the first hash 108, the digital signature 109 and the seed 110 (e.g., DC{s1, v1, σ1}).

In operation 312, the user device 104 displays the data representative of the presentation 106 (e.g., p1 an image associated with the user prompt) and the digital code 107 on the display 104a of the user device 104.

In operation 316, the user device 104 requests a VIC process to be performed based on the display of the presentation 106 and the digital code 107 on the display 104a of the user device 104. In this example, in response to the request, the user 105 operates a VIC application and/or VIC apparatus on the external apparatus or second user device 112 (e.g., mobile). The VIC application and/or the VIC apparatus may operate in a trusted environment and/or sandboxed environment on the second user device 112 (e.g., mobile). The VIC process operations performed during operation 316 are based on the VIC process 230 with reference to FIG. 2a and include the following operations of:
In operation 330, the user 105 opens the VIC application and/or the VIC apparatus for performing the VIC process on the second device 112. The VIC application and/or the VIC apparatus operates in a trusted or tamper resistant environment on the second user device 112, which reduces the risk of the VIC process being corrupted or maliciously changed by an unauthorised third party and the like.

In operation 332, the VIC process captures the displayed presentation 106 (e.g. p1) that is displayed on the user device 104 to generate a captured presentation 122 (e.g., p2), and also reads the displayed digital code 107 (e.g., DC{v1, σ1, sl}).

In operation 334, the VIC process computes a second hash 111 (e.g., v2) using the captured presentation 122 (e.g., p2).

In operation 338, the VIC process calculates the distance between the first hash 108 (e.g., v1) and the second hash 111 (e.g., v2), and determines whether the distance therebetween is acceptable. For example, the distance is acceptable if the first and second hashes 108 and 111 at least substantially match each other, where they substantially match each other when the distance is equal to or below a predetermined distance threshold or error threshold set by the service 103 and/or user 105. When the first and second hashes 108 and 111 are identical, then the distance is 0 and considered an exact match.

In operation 339, when the distance between the first hash 108 and second hash 111 is acceptable (e.g., they substantially match) the VIC process performs a verification on whether the digital signature 109 (e.g., σ1) using seed 110 (e.g., s1) is valid or legitimate.

In operation 340, if the distance is acceptable and the digital signature 109 is verified to be valid or legitimate, then the service request 101 is acceptable and legitimate and the VIC application and/or the VIC apparatus either sends a positive indication to the user device 104 and/or indicates, e.g. displays, a positive indication that the service request 101 associated with the presentation 106 and digital code 107 is legitimate or authentic and can be trusted. Otherwise, if either the distance is unacceptable or the digital signature 109 is verified to be invalid or illegitimate, then the service request 101 is unacceptable, illegitimate, or unauthentic and the VIC application and/or the VIC apparatus either sends a negative indication to the user device 104 and/or indicates, e.g. displays, a negative indication at the second user device 112 that the service request 101 associated with the presentation 106 and digital code 107 is illegitimate or unauthentic and should not be trusted.

At the user device 104, in operation 318, if the second user device 112 (e.g., mobile) sent a positive indication or displayed a positive indication in operation 340, then the user device 104 allows the user 105 to perform the prompt for user action in the service request 101. Alternatively or additionally, the user device 104 may notify the user 105 to trust the service request 101 and so the user 105 can perform the user action associated with the service request 101. In this case, the user 105 may enter their user credentials for submission to the service 103 for using the secure and/or subscription functionality and the like. If the second user device 112 sent a negative indication or displayed a negative indication in operation 340, then the user device 104 may disable the user 105 to perform the prompt for user action in the service request 101. Alternatively or additionally, the user device 104 may notify the user 105 to not perform the user action in the service request 101. In this case, the user 105 may reject entering their user credentials. The user device 104 may send a negative acknowledge or notification to the service 103 indicating rejection of the service request 101, where the service 103 may generate a new service request 101 as described in operation 302. If the service request 101 was an unprompted service request from the service 103, the user 105 may wait until another service request 101 is issued by the service 103 and perform the VIC on the other service request 101.

In operation 320, the user device 104 performs the user action based on the user input in response to performing the service request 101.

In operation 324, the user device 104 sends an acknowledgement or notification to the service 103 that the user action associated with service request 101 has been performed.

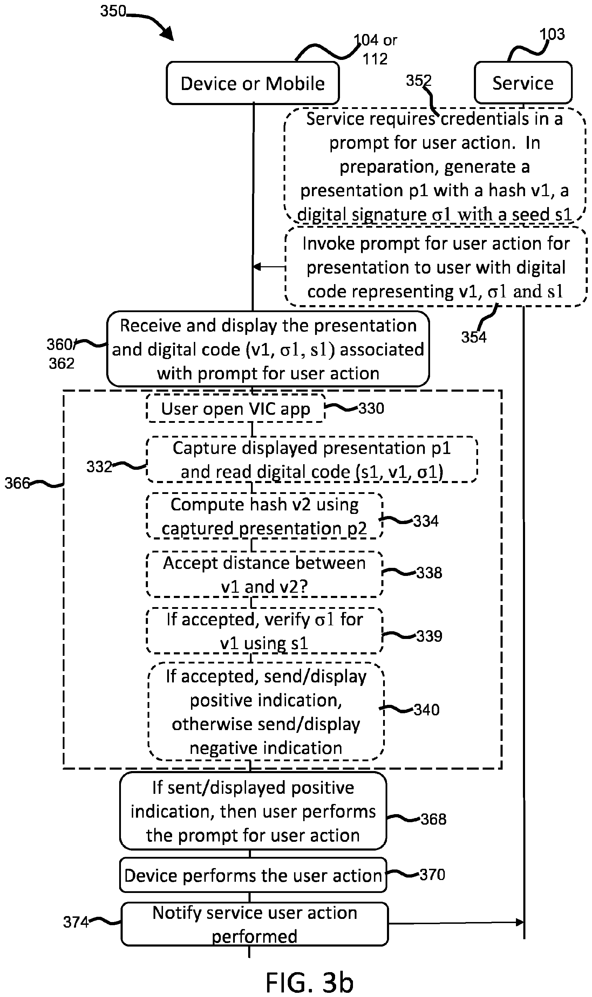

FIG. 3b is a signal flow diagram illustrating another example VIC signal flow 350 for performing a VIC by a user 105 on a service request 101 for user action / information from a service 103 as illustrated in FIG. 1b. The reference numerals of FIGs. 1a to 1c are reused and/or referred to for the same or similar components. In this example, the VIC signal flow 350 modifies the example VIC signal flow 300 by implementing the VIC process at the user device 104 as described with reference to FIG. 1b. The service 103 may implement the functionality of the service VIC process 200 as described with reference to FIG. 2a and/or as described with reference to FIG. 1b. The user device 104 may implement the functionality of the user device VIC process 210 as described with reference to FIG. 2b and/or as described with reference to FIG. 1a and also the VIC process 230 and 316 as described with reference to FIGs. 2c, 3a and/or as described with reference to FIG 1b. The VIC signal flow 350 performs operations 352, 354, 360/362, 366, 368, 370, and 374 using service 103 and/or user device 104. In this example, operations 352 and 354 performed at the service 103 are substantially the same as operations 302 and 304 performed by service 103 as described with reference to FIG. 3a. The operations 360 and 362 performed at user device 104 are substantially the same as operations 310 and 312 performed at user device 104 as described with reference to FIG 3a.

In operation 366, the user device 104 executes a VIC process based on the display of the presentation 106 and digital code 107 on the display 104a of the user device 104. In this example, the user device 104 includes a VIC application and/or VIC apparatus (e.g., hardware or software capable of performing the VIC application or process thereof in a trusted environment). For example, the VIC application may operate in a trusted environment and/or sandboxed environment on the user device 104. The trusted environment may be a trusted platform module, trusted execution environment, secure execution environment, and/or a sandboxed environment, and/or a part of or component of the operating system of the user device 104. The VIC process operations performed during operation 366 are based on the VIC process 230 with reference to FIG. 2a, and also VIC process 316 of FIG. 3a. For example, the operations 330 to 340 of VIC process 316 of FIG. 3a are performed on the user device 104. Operation 332 of FIG. 3a may be further modified by the user device 104 capturing the display using a screen shot or screen grab functionality rather than a camera and the like, otherwise operations 334 to 340 are the same or similar but which are implemented on the user device 104.

At the user device 104, in operation 368, if the VIC application, the apparatus and/or process 366 sent a positive indication or indicated, e.g. displayed, a positive indication in operation 340 on the display 104a of the user device 104, then the user device 104 allows the user 105 to perform the prompt for user action in the service request 101. Alternatively or additionally, the user device 104 may notify the user 105 to trust the service request 101 and so the user 105 can perform the user action associated with the service request 101. In this case, the user 105 may enter their user credentials for submission to the service 103 for using the secure and/or subscription functionality and the like. If the VIC application, apparatus and/or process 366 sent a negative indication or displayed a negative indication in operation 340 on the display 104a of the user device 104, then the user device 104 may disable the user 105 to perform the prompt for user action in the service request 101. Alternatively or additionally, the user device 104 may notify the user 105 to not perform the user action in the service request 101. In this case, the user 105 may reject entering their credentials or cancel the prompt for entering their user credentials etc. The user device 104 may send a negative acknowledge or notification to the service 103 indicating rejection of the service request 101, where the service 103 may generate a new service request 101 as described in operation 302. If the service request 101 was an unprompted service request from the service 103, the user 105 may wait until another service request 101 is issued by the service 103 and perform the VIC on the other service request 101.

In operation 370, the user device 104 performs the user action based on the user input in response to performing the service request 101.

In operation 374, the user device 104 sends an acknowledgement or notification to the service 103 that the user action associated with service request 101 has been performed.

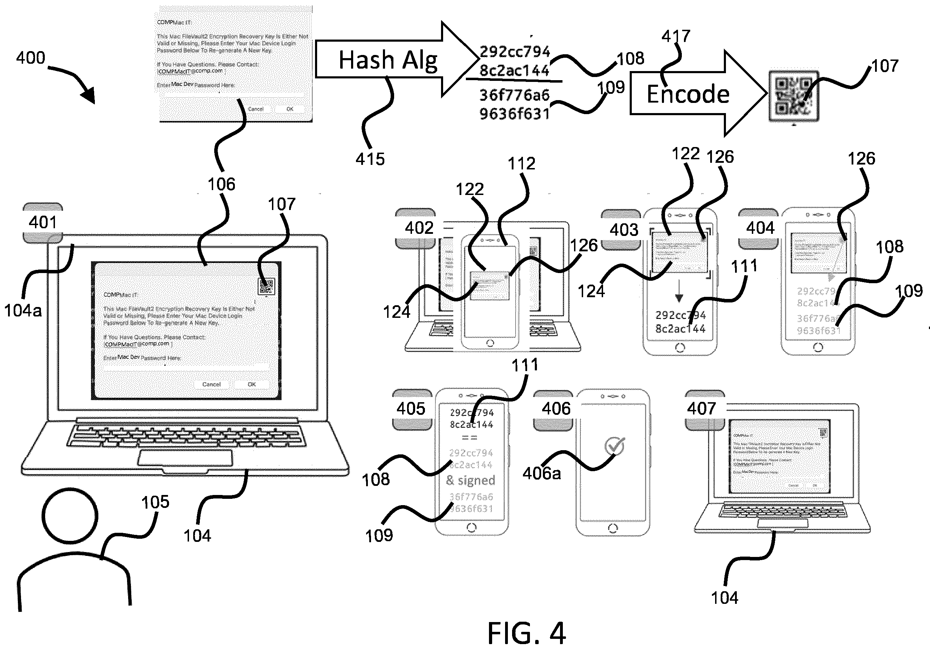

FIG. 4 is a flow diagram illustrating further example VIC system 400 for use by a user 105 with a user device 104 (e.g., a laptop) and a second user device 112 (e.g., a mobile communication device) for performing a VIC on requests from a service 103 implemented on a server or cloud platform and the like. The reference numerals of FIGs. 1a to 1c are reused and/or referred to for the same or similar components. In this example, the VIC system 400 includes the laptop 104 that is being operated by user 105 and mobile device 112 (e.g., an external device), which is also operable by the user 105.

In this example, the user 105 receives a service request 101 from the service 103, or from or via an email service, in the form of an email message requesting user credentials, account information and/or sensitive data. The email message may be sent from the email service of an email provider, which may be associated with information technology (IT) support on behalf of the organization of the user 105. Once the email message is prepared by the service 103, or the email service, the service 103, or the email service, generates a presentation 106 of the email message. In this example, the email service renders the email message in a form that it would likely appear on the display 104a of the laptop 104. The service 103, or the email service, generates a rendered image of the email message which forms the presentation 106. The service 103, or the email service then applies, for example, a perceptual-type of hash algorithm 415 to generate a first hash 108 (e.g., 292cc7948c2ac144...) of the presentation representing the rendered email message. The service 103, or the email service also generates a digital signature 109 (e.g., 36f776a69636f631...) associated with the first hash 108. The service 103, or the email service encodes at least the first hash 108 and the digital signature 109 using a digital encoding algorithm 417 (e.g., a QR encoding algorithm) to generate a digital code 107 (e.g., a QR code). In this case, the encoding algorithm 417 is an image encoding algorithm for encoding the first hash 108 and the digital signature 109 into an encoding that is capable of being read and decoded from a display or graphic. The email service sends the email message (e.g., a service request 101), which will be presented based on the presentation 106, along with the digital code 107, on the display 104 of the laptop 104 when it is opened by the user 105 using an email client on the laptop.

In step 401, when the user device 104 of the user 105 receives the email message, the user device 104 presents the presentation 106 of the email message on the display 104a of the user device 104 in a similar manner to how the service 103, or the email service rendered or generated the presentation 106 of the email message when generating the first hash 108. The user device 104 also displays the digital code 107 on the display 104a of the user device 104. The digital code 107 may be displayed outside the area of the presentation 106 of the email message, or in a solid colour area/region of the presentation 106 of the email message. In order to proceed safely, i.e., perform a VIC on the email message, the user 105 operates a mobile device 112 with a camera. The mobile device 112 has a visual integrity application (e.g., VIC mobile app) stored thereon that operates in a sandboxed or trusted environment.

In step 402, the user 105 uses the VIC mobile app of the mobile device 112 to direct the camera of the mobile device 112 to capture the laptop display 104a to generate the captured presentation 122. The captured presentation 122 includes an email message image 124 and a digital code image 126.

In step 403, the VIC mobile app uses a hashing algorithm to generate a second hash 111 (e.g., 292cc7948c2ac144...) from the email message image 124 of the captured presentation 122. The hashing algorithm used by the VIC mobile app is at least substantially similar or the same as the hashing algorithm 415 used by the service 103, or the email service, for generating the first hash 108. In this case, prior to using the hashing algorithm, the VIC mobile app may crop the captured presentation 122 to generate the email message image 126 by removing the digital code image 126 representing the digital code 107 that may be captured by the camera of the mobile phone 112, and/or replacing the cropped digital code image 126, for example, with an image portion matching the background surrounding the digital code image 126 of the digital code 107. This is to minimise the effect the image of the digital code image 126 may have when performing the hashing algorithm on the email message image 124 to generate the second hash 111.

In step 404, the VIC mobile app reads the digital code image 126 (e.g., QR code) which contains the first hash 108 (e.g., 292cc7948c2ac144...) and a digital signature 109 (e.g., 36f776a69636f631...) associated with the first hash 108. Given the hashing algorithm is a one-way function that produces a unique first hash 108, this ensures that the same QR code cannot be reused for another prompt or email message to the user 105, this assists in blocking replay attacks. In addition, the digital code 107 may further include a unique seed associated with the digital signature 109 for use in generating/verifying the digital signature 109 such that the digital signature 109 is different for different prompts/email messages. This further assists in blocking replay attacks as it makes each QR code unique and different. The digital code 107 and/or the first hash 108 associated with the prompt or service request (e.g., email message) is/are unique and a priori generated by the service 103, or the email service, (e.g., the trusted source/sender) when specifically creating the email messages, prompts, service requests requiring VICs.

In step 405, the VIC mobile app verifies whether the first and second hashes 108 and 111 match each other, and whether the digital signature 109 is legitimate and/or valid. The first and second hashes 108 and 111 are considered to match each other when the distance between the first and second hashes 108 and 111 (e.g., hamming distance, Euclidean distance, similarity, etc.) is below a predetermined distance threshold or an error threshold. The distance between the first and second hashes 108 and 111 may be calculated on a distance metric applicable to the hashing algorithm used to generate the first and second hashes 108 and 111. The VIC mobile application uses a digital signature verification algorithm to verify whether the digital signature 109 is legitimate and valid based on the seed, which may be included in the digital code 107.

In step 406, the VIC mobile app notifies the user 105 whether the received email message is legitimate. In this case, a positive VIC indication 406a (e.g., a tick) is presented to the user 105 on the display of the mobile device 112 because both the first and second hashes 108 and 111 match, and also the digital signature 109 is verified to be legitimate or valid. However, the VIC mobile app notifies the user 105 whether the received email message is illegitimate when either the first and second hashes 108 and 111 do not match (e.g., the distance is above the predetermined distance threshold), and also the digital signature 109 is verified to be illegitimate or invalid. In this case, a negative VIC indication 406a (e.g., a crossed) may be presented to the user 105 on the display of the mobile device 112.

In step 406, when the VIC mobile app provides a positive VIC indication that the email message is legitimate (e.g., the first and second hashes 108 and 111 match, and the digital signature 109 is valid) then the user can confidently enter their user credentials (e.g., their login and password) in step 407 in relation to the email message prompt. Although the service request 101 is an email message requesting user credentials, this is by way of example only and the service request 101 is not so limited, it is to be appreciated by the skilled person that, due to the plurality of different services and different possible styles of requests, the service request 101 may be in any format and/or any form, where the use request 101 may be presented as an interactive user prompt, a dialog check box, an email message, and/or any other type of display of a request to the user to perform an action as the application demands.

Although the example VIC system 400 is described in relation to an email service/application, this is by way of example only and the VIC system 400 or herein described is not so limited, it is to be appreciated by the skilled person that the VIC process/systems as described herein with reference to FIGs. 1a to 4 can be used in client-server implementation and/or application specific implementations (e.g., apps in smart devices) including use cases such as, without limitation, for example software as a service applications, email applications, retail website(s) and/or applications, any subscription service/application, online banking applications, social media platforms/applications, an IT department applications, enterprise and/or organizational applications, operating system and/or mobile provider applications/services, and/or any other trusted source/service that the user may use via their user device when accessing or using an associated service.

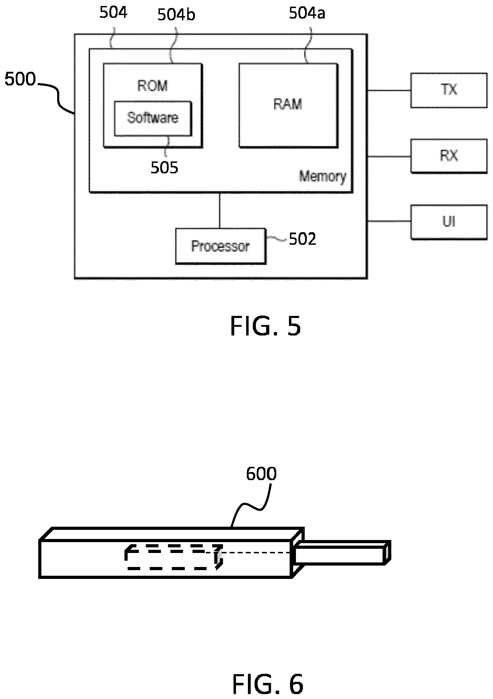

FIG. 5 shows an apparatus 500 according to some example embodiments, which may comprise the user device, mobile or user equipment or service server as described herein. The apparatus may be configured to perform the operations described herein, for example operations described with reference to any disclosed process. The apparatus comprises at least one processor 502 and at least one memory 504 directly or closely connected to the processor 502. The memory 504 includes at least one random access memory (RAM) 504a and at least one read-only memory (ROM) 504b. Computer program code (software) 505 is stored in the ROM 504b. The apparatus may be connected to a transmitter (TX) and/or a receiver (RX). The apparatus may be connected with a user interface (UI) for instructing the apparatus and/or for outputting data. The apparatus may include an imaging device or camera for capturing an image of a display 104a of the user device 104 or functionality for taking a screenshot of a display 104a of the apparatus. Further, the apparatus, comprising at least one processor 502, with the at least one memory 504 storing instructions, e.g., the computer program code 505, when executed by the at least one processor, cause the apparatus to at least perform at least the method/process , for example, as disclosed and described in relation to the FIGs. 1a to 1c, 2a to 2c, 3a to 3b, and 4 and related features thereof. Furthermore, in some other implementations, the apparatus comprises one or more circuitries to cause the apparatus to at least perform the method/process, for example, as disclosed and described in relation to the FIGs. 1a to 1c, 2a to 2c, 3a to 3b, and 4 and related features thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

FIG. 6 shows a non-transitory media 600 according to some embodiments. The non-transitory media 600 is a computer readable storage medium. It may be e.g., a compact disc (CD), a digital versatile disc (DVD), a universal serial bus (USB) stick, a blue ray disk, Secure Digital (SD) Card, etc. The non-transitory media 600 stores computer program code, causing an apparatus to perform the method of any preceding process for example as disclosed in relation to the flow diagrams, signal flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G (2nd Generation)/3G/4G/5G and/6G or any future Generation and beyond networks and further generations of 3GPP but also in non-3GPP radio networks such as Wi-Fi.

A memory may be volatile or non-volatile. It may be e.g., a RAM, a SRAM, a flash memory, a FPGA block ram, a SD, a DVD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus (112) comprising:
means for capturing a presentation (106) on a display (104a), wherein the presentation (106) includes data representative of a first hash (108);
means for generating a second hash (111) from the captured presentation (122);
means for reading a digital code (107) from the display (104a) or the captured presentation (122), the digital code (107) comprising the first hash (108) and a digital signature (109) associated with the first hash (108);
means for comparing the first hash (108) and second hash (111); and
means for sending an indication on whether the digital signature (109) is legitimate in response to the first and second hashes (108, 111) at least substantially matching.

2. An apparatus as claimed in claim 1, wherein the display (104a) is part of a user device (104) separate to the apparatus (112), the apparatus (112) comprising an imaging component for capturing the presentation (106) on the display (104a) of the user device (104).

3. An apparatus as claimed in claim 1, wherein the display (104a) is part of the apparatus (112), wherein the means for capturing the presentation (106) on the display (104a) of the apparatus (112) further comprising means for capturing a screenshot of the presentation (106) on the display, wherein the screenshot is the captured presentation (122).

4. An apparatus as claimed in any preceding claim, wherein the presentation (106) comprises one or more from the group of:
an image for presentation on the display (104a);
a plurality of images for presentation on the display (104a);
a video for presentation on the display (104a); or
data representative of a user prompt, interactive prompt, or dialog box for rendering on the display (104a).

5. An apparatus as claimed in any preceding claim, wherein the captured presentation (122) comprises a first image (124) associated with the first hash (108) and a second image (126) associated with the digital code (107), and wherein:
the means for generating the second hash (111) of the captured presentation (122) further comprises means for applying a hashing algorithm to the first image (124) for outputting the second hash (111); and
the means for reading the digital code (107) from the display (104a) further comprises means for reading the digital code (107) from the second image (126).

6. An apparatus as claimed in claim 5, further comprising means for cropping the captured presentation (122) to generate the first image (124) and means for cropping the captured presentation (122) to generate the second image (126).

7. An apparatus as claimed in any preceding claim, the digital code (107) further comprising one or more from the group of:
a bar code;
a two-dimensional matrix bar code;
a Quick Response, QR, code;
a High Capacity Colored two-Dimensional, HCC2D, Code;
a digital code embedded in a presentation or image;
a digital code represented by presentation or image;
any other encoding using images; or
any other encoding capable of being presented on the display 104a and decoded from the presented encoding when captured.

8. An apparatus as claimed in any preceding claim, wherein the means for comparing the first hash (108) and the second hash (111) further comprises:
means for calculating a distance between the first hash (108) and second hash (111); and
means for determining the first hash (108) and second hash (111) are at least substantially matching when the distance is less than or equal to a predetermined distance threshold or error threshold.

9. An apparatus as claimed in any preceding claim, wherein the first hash (108) and the second hash (111) are generated using a hashing algorithm based on one or more hashing algorithms from the group of:
an Average Hashing, aHash, algorithm;
a Median Hashing, mHash, algorithm;
a Perceptual Hashing, pHash, algorithm;
a Difference Hashing, dHash, algorithm;
a Block Hashing, bHash, algorithm;
a Wavelet Hashing, wHash, algorithm;
a ColorMoment Hashing algorithm;
a Color Hashing, Colorhas, algorithm,
a Marr-Hildreth, marrhildreth, hashing algorithm;
a fuzzy hashing algorithm;
a video hashing algorithm;
a locality-sensitive hashing algorithm;
a machine learning hashing algorithm;
a pair of machine learning hashing models; or
any other hashing algorithm configured for generating a hash from one or more images.

10. An apparatus as claimed in claim 9, wherein:
the hashing algorithm used for generating the first hash (108) and the second hash (111) is the same hashing algorithm; or
the hashing algorithm used for generating the first hash (108) and the second hash (111) are similar or different hashing algorithms that generate the same hash.

11. An apparatus as claimed in any preceding claim, wherein the digital code (107) further includes data representative of a seed (110) associated with the digital signature (109), wherein the seed is used by a digital signature algorithm for verifying whether the digital signature (109) is legitimate or valid.

12. An apparatus as claimed in any preceding claim, wherein the presentation (106) is associated with a prompt or request from a service (103) for user action or information from the user (105) of the apparatus (112) and/or a user device (104) of the user (105) using the service (103), and the means for sending an indication to the user (105) further comprising:
means for providing an indication to the user (105) via the apparatus (112) or the user device (104) as to whether to perform the prompt or request for user action or information on the apparatus (112) or the user device (104), respectively, based on whether the digital signature (109) from the service (103) is legitimate or valid and in response to the first and the second hashes (108, 111) substantially matching.

13. An apparatus for a service (103) comprising:
means for generating (200) a presentation (106) and digital code (107) associated with requesting a user action or information at a user device (104, 112) using the service (103), wherein the digital code (107) comprises a hash (108) associated with the presentation (106) and a digital signature (109) associated with the hash (108); and
means for sending a request (101) for the user action or information to the user device (104, 112), wherein the request (101) comprises data representative of the presentation (106) and digital code (107) for display on the user device (104, 112) to authenticate the request (101) from the service (103) by the user (105).

14. An apparatus (104) comprising:
means for receiving (212) a request (101) for user action or information at the user apparatus (104) of a user (105) from a service (103), the request (101) for user action comprising data representative of a presentation (106) and a digital code (107) for display on the user device (104) for authenticating the request (101) from the service (103), wherein the presentation (106) and digital code (107) are generated by the service (103), the digital code (107) comprising a hash (108) of the presentation (106) and a digital signature (109) associated with the hash (108);
means for displaying (214) the presentation (106) and the digital code (107) on the user apparatus (104);
means for performing (216) a visual integrity check of the request (101) using the displayed presentation (106) and the digital code (107);
means receiving (218) an indication whether the digital code (107) and the presentation (106) are authentic or legitimate;
in response to the indication of the digital code (107) and presentation (106) being authentic or legitimate, means for notifying (220) the user (105) to perform the requested user action; and
in response to the indication of the digital code (107) and the presentation (106) being unauthentic or illegitimate, means for notifying (222) the user to reject performing the requested user action.

15. A system (100) comprising:
a server apparatus providing a service (103) according to claim 13; and
a user apparatus (104) according to claim 14, wherein the server apparatus providing the service (103) and the user apparatus (104) communicate over a network when the user (105) uses said service (103) via the user apparatus (104).
